# EUROPÄISCHE PATENTSCHRIFT

(11) **EP 2 838 695 B1**
(45) Veröffentlichungstag und Bekanntmachung des Hinweises auf die Patenterteilung: **25.05.2016**
(21) Anmeldenummer: 13717451.2
(22) Anmeldetag: 03.04.2013
(51) Int. Cl.: B24B 45/00, B24B 23/02, B24B 23/04

(54) **HANDWERKZEUG MIT EINER SPANNVORRICHTUNG FÜR EIN WERKZEUG**
HAND TOOL HAVING A CLAMPING DEVICE FOR A TOOL
OUTIL MANUEL COMPRENANT UN DISPOSITIF DE SERRAGE POUR UN OUTIL

(30) Priorität: 17.04.2012 DE 102012007926
(43) Veröffentlichungstag der Anmeldung: 25.02.2015
(73) Patentinhaber: C. & E. Fein GmbH, 73529 Schwäbisch Gmünd-Bargau (DE)
(72) Erfinder: MAISSEN, Curdin, 8320 Fehraltorf (CH)
(74) Vertreter: Witte, Weller & Partner Patentanwälte mbB
(86) Internationale Anmeldenummer: PCT/EP2013/057013
(87) Internationale Veröffentlichungsnummer: WO 2013/156306

(56) Entgegenhaltungen:
- EP-A1- 2 017 036
- EP-A2- 1 180 416
- DE-A1-102008 008 372
- DE-C1- 3 405 885

## Beschreibung

Die Erfindung betrifft ein kraftgetriebenes Handwerkzeug mit einem Gehäuse mit einem Spindelkopf, mit einer um ihre Längsachse antreibbaren, insbesondere drehoszillatorisch antreibbaren Werkzeugspindel, wobei die Werkzeugspindel ein werkzeugseitiges Ende mit einem Halteabschnitt für ein anzutreibendes Werkzeug aufweist, und mit einer Spannvorrichtung mit einem Befestigungselement, wobei die Spannvorrichtung eine Spannkonfiguration, in der das Werkzeug mittels des Befestigungselements an der Werkzeugspindel fixierbar ist, und eine Freigabekonfiguration aufweist, in der das Werkzeug lösbar ist, und mit einem Stellelement, das relativ zur Werkzeugspindel verlagerbar ist und in der Spannkonfiguration eine erste definierte Relativlage und in der Freigabekonfiguration eine zweite definierte Relativlage bezüglich der Werkzeugspindel (16) einnimmt.

Ein solches Handwerkzeug ist aus der EP 1 180 416 A2 bekannt. Hierbei ist zum Lösen bzw. zur Freigabe eines Befestigungselementes ein Spannhebel vorgesehen, der zwischen einer Spannposition und einer Freigabeposition verschwenkbar ist und umgekehrt.

Ein ähnliches Handwerkzeug ist aus der WO 2005/102605 A1 bekannt. Das bekannte Handwerkzeug weist eine Arbeitsspindel zum Antrieb eines Werkzeugs auf, wobei das Werkzeug mittels eines Befestigungselements an einem werkzeugseitigen Ende der Arbeitsspindel fixierbar ist. Ferner eine Verschiebeeinrichtung zur Verschiebung des Befestigungselements zwischen einer Lösestellung und einer Spannstellung vorgesehen. Das bekannte Handwerkzeug weist zur Betätigung der Verschiebeeinrichtung einen Spannhebel mit einem Exenter auf, der zwischen einer ersten Lage und einer zweiten Lage verschwenkbar ist, die etwa der Spannstellung und der Lösestellung des Befestigungselements entsprechen können.

Das bekannte Handwerkzeug kann einen schnellen und einfachen Wechsel eines Werkzeugs ermöglichen, ohne dass es zum Lösen und Fixieren des Werkzeugs separater Hilfsmittel bedarf, wie etwa Schraubschlüssel, Schraubendreher, Imbusschlüssel oder Ähnliches. Insbesondere bedarf es keiner Spezialwerkzeuge, um das Werkzeug an der Arbeitsspindel festlegen zu können.

Ein Benutzer kann die Verschiebeeinrichtung mittels definierter Schwenkbewegungen, etwa einmal im Uhrzeigersinn sowie einmal im Gegenuhrzeigersinn, zwischen der Spannstellung und der Lösestellung umschalten. In der Lösestellung kann der Spannhebel eine Lage einnehmen, in der er über eine Silhouette des Handwerkzeugs hinausragt. Beispielsweise kann der Spannhebel deutlich über ein Gehäuse des Handwerkzeugs hinausragen. Dies kann beim Transport des Handwerkzeugs hinderlich sein, etwa wenn ein Transportkoffer oder Ähnliches mit definierten Aufnahmekonturen für das Gehäuse des Handwerkzeugs verwendet wird. Um diesen Nachteil zu umgehen, kann der Benutzer in einfacher Weise den Hebel von der Lösestellung zurück in die Spannstellung verschwenken, so dass er wieder in die Silhouette des Handwerkzeugs integriert ist. Bei einem erneuten Einsatz des bekannten Handwerkzeugs kann der Spannhebel wiederum von der Spannstellung in die Lösestellung überführt werden. Schlussendlich kann nach der Aufnahme eines Werkzeugs dieses durch erneutes Verschwenken des Spannhebels von der Lösestellung in die Spannstellung an der Arbeitsspindel fixiert werden.

Vor diesem Hintergrund liegt der Erfindung die Aufgabe zugrunde, ein kraftgetriebenes Handwerkzeug anzugeben, das in alternativer Weise einen einfachen Werkzeugwechsel ohne separate Hilfsmittel erlaubt und möglichst einfach bedienbar ist. Insbesondere sollen sich überflüssige Stellbewegungen der Spannvorrichtung möglichst vermeiden lassen.

Diese Aufgabe wird bei einem kraftgetriebenen Handwerkzeug gemäß der eingangs genannten Art dadurch gelöst, dass eine Führungsbahn vorgesehen ist, die zumindest ein erstes Extremum und zumindest ein zweites Extremum aufweist, wobei die erste definierte Relativlage des Stellelements in der Spannkonfiguration durch das zumindest eine erste Extremum und die zweite definierte Relativlage des Stellelements in der Freigabekonfiguration durch das zumindest eine zweite Extremum definiert ist, und wobei die Spannvorrichtung mittels einer gleichgerichteten Stellbewegung zwischen der Spannkonfiguration und der Freigabekonfiguration umschaltbar ist.

Die Aufgabe der Erfindung wird auf diese Weise gelöst.

Erfindungsgemäß kann nämlich nunmehr durch einen Benutzer durch eine im Wesentlichen gleichgerichtete Betätigungsbewegung die Spannvorrichtung abwechselnd in die Spannkonfiguration und in die Freigabekonfiguration gebracht werden. Der Übergang zwischen der Spannkonfiguration und der Freigabekonfiguration muss also nicht mehr durch im Wesentlichen entgegengesetzte Betätigungsbewegungen vollzogen werden.

Die im Wesentlichen gleichgerichtete Stellbewegung kann also dann, wenn sich die Spannvorrichtung in der Spannkonfiguration befindet, eine Überführung in die Freigabekonfiguration bewirken. Umgekehrt kann eine sich in der Freigabekonfiguration befindliche Spannvorrichtung mittels der im Wesentlichen gleichgerichteten Stellbewegung wiederum in die Spannkonfiguration überführt werden.

Ähnliche Mechanismen sind in anderen Gebieten der Technik bekannt. Beispielsweise erlauben es sog. Push-Push-Mechanismen bzw. Kugelschreibermechanismen, mittels gleichgerichteter Betätigungsbewegungen im Wesentlichen gleichgerichtete Stellbewegungen zu veranlassen, um verschiedene Stellungen oder Konfigurationen eines Mechanismus zu bewirken.

Es versteht sich, dass die im Wesentlichen gleichgerichtete Stellbewegung grundsätzlich auch von einer anderen Bewegung überlagert sein kann. Beispielsweise kann eine im Wesentlichen gleichgerichtete axiale Stellbewegung ferner auch Radialkomponenten, etwa zumindest partielle Verdrehungen oder Verschwenkungen umfassen. Derartige überlagernde Bewegungen können bei verschiedenen Ausgestaltungen grundsätzlich auch einander entgegengerichtet sein. Mit anderen Worten kann also der Übergang von der Spannkonfiguration in die Freigabekonfiguration und zurück in die Spannkonfiguration eine jeweils gleichgerichtete (axiale) Stellbewegung umfassen, die jedoch von einer wechselsinnigen Verschwenkung überlagert ist. Es ist jedoch ebenso vorstellbar, dass eine überlagernde Schwenkbewegung grundsätzlich auch gleichsinnig erfolgt.

Die Stellbewegung kann durch eine Betätigungsbewegung des Benutzers veranlasst werden. Es ist vorstellbar, die Stellbewegung derart mit der Betätigungsbewegung zu koppeln, dass vom Benutzer ausschließlich gleichgerichtete Betätigungsbewegungen aufzubringen sind.

Es versteht sich ferner, dass die gleichgerichtete Stellbewegung ferner eine Rückstellbewegung umfassen kann, die jedoch selbsttätig ohne Benutzereingriff erfolgen kann. Die Rückstellbewegung ist grundsätzlich der Stellbewegung entgegengerichtet. Die Rückstellbewegung kann etwa dazu genutzt werden, die Spannvorrichtung bzw. deren Komponenten schlussendlich in eine mit der Spannkonfiguration korrespondierende Spannstellung bzw. eine mit der Freigabekonfiguration korrespondierende Freigabestellung zu verlagern, nachdem die Spannvorrichtung mittels der Stellbewegung aus der vorherigen Konfiguration ausgerückt wurde.

Bei der Relativlage kann es sich insbesondere um eine definierte Axiallage entlang der Längsachse handeln. Mit anderen Worten kann das Stellelement durch eine Verlagerung entlang der Längsachse definiert verfahren werden, die mittels der gleichgerichteten Stellbewegung ausgelöst wird. Beim wechselseitigen Übergang zwischen der ersten definierten Relativlage und der zweiten definierten Relativlage kann das Stellelement entlang der Längsachse hin- und herverfahren werden. Somit kann die grundsätzlich gleichgerichtete Stellbewegung schlussendlich Verlagerungen des Stellelements bewirken, die wechselseitig entgegengerichtet sind. Dies kann insbesondere durch ein Zusammenwirken der gleichgerichteten Stellbewegung mit der Rückstellbewegung erfolgen.

Die erste definierte Relativlage und die zweite definierte Relativlage können grundsätzlich auch eine definierte Drehlage des Stellelements relativ zur Werkzeugspindel umfassen. Wie vorstehend bereits erwähnt, ist es jedoch auch vorstellbar, dass sich beim wechselseitigen Übergang zwischen der Freigabekonfiguration und der Spannkonfiguration die Drehlage des Stellelements kontinuierlich oder schrittweise verändert. Es ist jedoch auch vorstellbar, dass der ersten definierten Relativlage genau eine erste definierte Drehlage und der zweiten definierten Relativlage genau eine zweite Drehlage zugeordnet ist.

Das Stellelement kann mit dem Befestigungselement koppelbar sein. Beispielhaft kann das Stellelement in der Spannkonfiguration das Befestigungselement in Richtung auf den Halteabschnitt der Werkzeugspindel drängen und vorspannen. Gemäß einer Ausgestaltung kann das Stellelement gemeinsam mit dem Befestigungselement integriert und insbesondere einstückig ausgebildet sein. Es ist jedoch auch vorstellbar, das Stellelement und das Befestigungselement mittelbar oder unmittelbar miteinander zu koppeln und insbesondere lösbar miteinander zu koppeln. Beispielhaft kann das Befestigungselement in der Freigabekonfiguration vom Stellelement lösbar sein, um eine Aufnahme eines Werkzeugs zu vereinfachen.

Erfindungsgemäß ist eine Führungsbahn vorgesehen, die zumindest ein erstes Extremum und zumindest ein zweites Extremum aufweist, wobei die erste definierte Relativlage des Stellelements in der Spannkonfiguration durch das zumindest erste Extremum und wobei die zweite definierte Relativlage des Stellelements in der Freigabekonfiguration durch das zumindest eine zweite Extremum definiert ist.

Mit anderen Worten kann die Führungsbahn etwa lokale und globale Maxima aufweisen, die sich miteinander abwechseln und insbesondere durch Minima miteinander verbunden sind. Es versteht sich, dass im Sinne einer umgekehrten Betrachtung die Führungsbahn ebenso auch lokale und globale Minima umfassen kann, die einander abwechselnd angeordnet sind und insbesondere durch Maxima verbunden sind.

Die Führungsbahn kann etwa als Führungsnut ausgebildet sein. Eine Führungsnut kann die Führungsbahn zweiseitig, etwa durch beide Flanken der Nut begrenzen. Die Führungsbahn kann jedoch auch eine einseitige Flanke umfassen. In einem solchen Fall kann sich die Führungsbahn etwa dadurch ergeben, dass das Stellelement mit einer Kraft in Richtung auf die Flanke vorgespannt ist.

Die Führungsbahn kann zumindest teilweise formschlüssig ausgeführt sein. Alternativ oder zusätzlich kann das Stellelement durch Krafteinwirkung in der Führungsbahn gehalten werden.

Gemäß einer Weiterbildung ist die Führungsbahn als umlaufende Führungsbahn ausgebildet, wobei das Stellelement bei wiederholter Stellbewegung insgesamt eine Verdrehung um die Werkzeugspindel vollzieht.

Mit anderen Worten kann sich die Führungsbahn etwa einmal um die Längsachse herum erstrecken bzw. diese umrunden. Die Führungsbahn kann grundsätzlich an einem Umfang der Werkzeugspindel oder des Stellelements ausgebildet sein. Die umlaufende Führungsbahn kann eine umlaufende Führungsnut oder eine umlaufende Führungsflanke umfassen. Die Verdrehung des Stellelements kann sich durch Drehkomponenten oder Schwenkkomponenten ergeben, die die gleichgerichtete Stellbewegung jeweils überlagern. Mit anderen Worten kann das Stellelement bei jeder Stellbewegung (in Zusammenwirkung mit jeder Rückstellbewegung) eine definierte Verdrehung um die Längsachse vollziehen.

In alternativer Ausgestaltung ist die Führungsbahn als zurückkehrende Führungsbahn ausgebildet, wobei das Stellelement bei wiederholter Stellbewegung bezüglich der Werkzeugspindel abwechselnd hin- und hergeschwenkt wird.

Im Gegensatz zur umlaufenden Führungsbahn erstreckt sich die zurückkehrende Führungsbahn nicht um die Längsachse der Werkzeugspindel herum. Die Werkzeugspindel wird nicht "umrundet". Beispielhaft kann die zurückkehrende Führungsbahn als "herzförmige" Kulisse an einer Umfangsseite der Werkzeugspindel oder des Stellelements ausgebildet sein. Andere Gestaltungen sind denkbar.

Die umlaufende Führungsbahn kann eine Vielzahl von Drehlagen für das Stellelement definieren. Dies gilt insbesondere dann, wenn die umlaufende Führungsbahn eine Mehrzahl erster Maxima und eine damit korrespondierende Mehrzahl zweiter Maxima aufweist. Die Summe der ersten Extrema und der zweiten Extrema kann die Anzahl der definierten Drehlagen des Stellelements ergeben.

Die rückkehrende Führungsbahn kann regelmäßig genau ein erstes Maximum und genau ein zweites Maximum aufweisen. Beim Durchlaufen der Führungsbahn ist beim Übergang vom ersten Maximum zum zweiten Maximum ein erstes Minimum zu überwinden. Bei der weiteren Bewegung vom zweiten Maximum zum ersten Maximum ist ein zweites Minimum zu überwinden. Mit anderen Worten vollzieht das Stellelement bei der zurückkehrenden Führungsbahn beim Umlauf keine identische aber entgegengerichtete Bewegung, sondern vielmehr zwei verschiedene Teil-Bewegungen, deren Startpunkte und Endpunkte wechselseitig miteinander korrespondieren.

In bevorzugter Weiterbildung ist die Führungsbahn an der Werkzeugspindel ausgebildet, wobei das Stellelement zumindest ein Führungselement aufweist, das entlang der Führungsbahn verfahrbar ist.

Das Führungselement kann etwa als Stift oder Führungsprofil am Stellelement ausgebildet sein und sich etwa an einem Umfang des Stellelements im Wesentlichen radial nach außen erstrecken. Vorzugsweise ist die Führungsbahn an einem Innenumfang der Werkzeugspindel ausgebildet.

Es versteht sich, dass in alternativer Ausgestaltung die Führungsbahn am Stellelement ausgebildet sein kann, wobei das zumindest eine Führungselement an der Werkzeugspindel angeordnet ist.

Gemäß einem weiteren Aspekt des Handwerkzeugs ist das Stellelement mit einem Ausrückelement koppelbar, das dazu ausgebildet ist, das Stellelement selektiv aus der ersten Relativlage oder der zweiten Relativlage auszurücken.

Mit anderen Worten kann der Benutzer das Ausrückelement mittelbar oder unmittelbar betätigen, um die Stellbewegung des Stellelements auszulösen. Bei einer solchen Gestaltung kann bspw. eine etwaige Verdrehung des Stellelements ohne Rückwirkung auf den Benutzer erfolgen. Das Ausrückelement kann dazu ausgebildet sein, axial entlang der Längsachse verfahren zu werden. Die erste Relativlage kann mit dem zumindest einen ersten Extremum korrespondieren. Die zweite Relativlage kann mit dem zumindest einen zweiten Extremum korrespondieren.

In vorteilhafter Ausgestaltung ist ein Federelement vorgesehen, das das Stellelement in Richtung auf das zumindest eine erste Extremum und das zumindest eine zweite Extremum beaufschlagt.

Auf diese Weise kann die Rückstellbewegung selbsttätig durch eine mittels des Federelements aufgebrachte Kraft erfolgen. Die Federkraft kann insbesondere in Richtung auf ein antriebsseitiges Ende der Werkzeugspindel gerichtet sein. Das antriebsseitige Ende der Werkzeugspindel ist das dem werkzeugseitigen Ende abgewandte Ende. Zum Übergang zwischen der Spannkonfiguration und der Freigabekonfiguration kann das Stellelement mittels der gleichgerichteten Stellbewegung gegen die Kraft des Federelements beispielhaft über die jeweiligen Minima geführt werden, die das erste Extremum und das zweite Extremum verbinden. Wenn das Federelement auf das Stellelement einwirkt, kann die Führungsbahn grundsätzlich einseitig, also mit lediglich einer Führungsflanke ausgebildet sein.

Gemäß einer Weiterbildung dieser Ausgestaltung wird das Befestigungselement in der Spannkonfiguration mittels des Federelements in Richtung auf den Halteabschnitt der Werkzeugspindel beaufschlagt

Auf diese Weise kann das Federelement sowohl die Lage des Stellelements definieren als auch derart auf das Befestigungselement einwirken, dass das Werkzeug in der Spannkonfiguration sicher an der Werkzeugspindel fixiert ist.

Gemäß einer weiteren Ausgestaltung sind das Befestigungselement und das Stellelement miteinander koppelbar.

Gemäß einem weiteren Aspekt weist das Handwerkzeug eine Betätigungseinrichtung auf, die ein Betätigungselement aufweist, das mit dem Stellelement zu dessen Verlagerung koppelbar ist.

Mittels des Betätigungselements kann der Benutzer eine Betätigungsbewegung aufbringen, die die im Wesentlichen gleichgerichtete Stellbewegung veranlasst. Mit anderen Worten kann der Benutzer grundsätzlich ebenso gleichgerichtet über das Betätigungselement auf das Stellelement einwirken. Im Stand der Technik bekannte Betätigungsmechanismen erfordern hingegen entgegengerichtete Betätigungsbewegungen, um Spannvorrichtungen wechselseitig in die Spannkonfiguration und die Freigabekonfiguration zu überführen. Die Betätigung kann sich vereinfachen.

Gemäß einer Weiterbildung dieser Ausgestaltung ist das Betätigungselement dazu ausgebildet, eine durch einen Benutzer aufgebrachte Betätigungskraft zu verstärken.

Das Betätigungselement kann etwa unter Beachtung des Hebelprinzips oder des Prinzips der schiefen Ebene gestaltet sein. Das heißt, beispielhaft kann die Betätigungsbewegung einen vergleichsweise großen Betätigungsweg bei einer vergleichsweise geringen Betätigungskraft umfassen. Durch geeignete Kraftübersetzung bzw. Weguntersetzung kann sich etwa beim Stellelement ein vergleichsweise geringer Stellweg gepaart mit einer vergleichsweise hohen Stellkraft ergeben. Auf diese Weise kann etwa das Federelement hinreichend dimensioniert sein, um das Werkzeug in der Spannkonfiguration sicher in der Werkzeugspindel festzulegen.

Gemäß einer weiteren Gestaltung kann das Betätigungselement etwa als Betätigungsschieber oder als Betätigungshebel ausgebildet sein.

Es versteht sich, dass der Benutzer alternativ auch in anderer Weise mittelbar oder unmittelbar (axial) auf das Stellelement einwirken kann. Hierzu kann das Betätigungselement etwa als Betätigungsknopf ausgebildet sein.

Das Betätigungselement kann ferner beispielhaft auch als Betätigungsrad ausgebildet sein. Ein solches Rad kann grundsätzlich um eine Achse verdrehbar gestaltet sein, die parallel oder senkrecht zur Längsachse der Werkzeugspindel angeordnet ist. Ein Betätigungsrad, dessen Achse parallel zur Längsachse angeordnet ist, kann etwa an seiner Stirnfläche eine axiale Führungskontur umfassen, die in geeigneter Weise auf das Stellelement zu dessen Verlagerung einwirkt. Ein Betätigungsrad, dessen Achse im Wesentlichen senkrecht zur Längsachse angeordnet ist, kann an seinem Umfang eine radiale Führungskontur umfassen. Ein solches Betätigungsrad kann etwa als "umlaufender" Betätigungshebel aufgefasst werden.

Gemäß einer Weiterbildung des Handwerkzeugs ist das Befestigungselement in der Freigabekonfiguration gegenüber seiner Lage in der Spannkonfiguration gegenüber der Werkzeugspindel entlang der Längsachse axial verlagert.

Eine solche axiale Verlagerbarkeit des Befestigungselements erlaubt eine Vielzahl von Gestaltungen geeigneter Werkzeugaufnahmen. Beispielhaft kann ein zu befestigendes Werkzeug eine offene Werkzeugaufnahmekontur aufweisen und der Werkzeugspindel im Wesentlichen seitlich (radial) zugeführt werden. In einem solchen Fall ist es nicht erforderlich, das Befestigungselement in der Freigabekonfiguration von der Werkzeugspindel zu lösen. Vielmehr kann das Werkzeug seitlich zugeführt werden und anschließend durch Überführung der Spannvorrichtung in die Spannkonfiguration sicher an der Werkzeugspindel festgelegt werden.

Andere Gestaltungen sind denkbar. Beispielsweise kann das Werkzeug eine geschlossene Aufnahmekontur oder Aufnahmeöffnung aufweisen. Ein solches Werkzeug kann festgelegt werden, indem das Befestigungselement in der Spannkonfiguration nicht nur axial entlang der Längsachse verlagert wird, sondern auch relativ zur Aufnahmeöffnung des Werkzeugs verdreht wird. Eine solche Relativverdrehung kann etwa dann, wenn die Werkzeugaufnahmeöffnung und das Befestigungselement miteinander korrespondierende Silhouetten (Profile) aufweisen, zu einer zumindest partiellen Überdeckung führen. Auf diese Weise kann das Werkzeug zur Befestigung im Wesentlichen axial zugeführt werden und das Befestigungselement überwinden. Trotzdem kann sich in der Spannkonfiguration eine formschlüssige axiale Lagesicherung des Werkzeugs ergeben.

Gemäß einer weiteren Ausgestaltung ist das Befestigungselement in der Freigabekonfiguration von der Werkzeugspindel lösbar.

Eine solche Gestaltung wird etwa in der WO 2005/102605 A1 gezeigt. Ähnliche Gestaltungen mit lösbaren Befestigungselementen zeigen die EP 2 017 036 A1 und die DE 20 2009 001 439 U1. Auch derartige Gestaltungen können vorteilhaft mit der Spannvorrichtung kombiniert werden, die mittels der gleichgerichteten Stellbewegung umschaltbar ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, dies jedoch im Rahmen der angehängten Patentansprüche.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine perspektivische Ansicht eines Handwerkzeugs;
- Fig. 2: eine vereinfachte seitliche Teilansicht einer Werkzeugspindel mit einem Werkzeug in teilweise geschnittener Darstellung;
- Fig. 3: einen seitlichen Schnitt durch ein Handwerkzeug etwa gemäß Fig. 1 im Bereich des Getriebekopfes;
- Fig. 4: eine vereinfachte schematische Teilansicht eines Werkzeugs von oben;
- Fig. 5a: eine stark vereinfachte schematische Teildarstellung einer abgewickelten Führungsbahn;
- Fig. 5b: eine vereinfachte Teildarstellung eines Stellelements mit Führungselementen, das etwa mit der Führungsbahn gemäß Fig. 5a zusammenwirken kann;
- Fig. 6a bis 6d: stark vereinfachte schematische Teildarstellungen eines Mechanismus mit einer Führungsbahn, einem Stellelement und einem Ausrückelement in verschiedenen Relativlagen;
- Fig. 7a, 7b: zwei seitliche vereinfachte Ansichten einer ersten Betätigungseinrichtung in verschiedenen Relativlagen;
- Fig. 8: eine stark vereinfachte seitliche Darstellung eines gegenüber der Darstellung in den Figuren 7a und 7b abgewandelten Befestigungselements;
- Fig. 9: eine weitere stark vereinfachte Darstellung eines weiteren gegenüber der Darstellung in den Figuren 7a und 7b abgewandelten Befestigungselements; und
- Fig. 10: eine weitere vereinfachte schematische Darstellung einer Führungsbahn mit beispielhaft angedeuteten Lagen eines Führungselements.

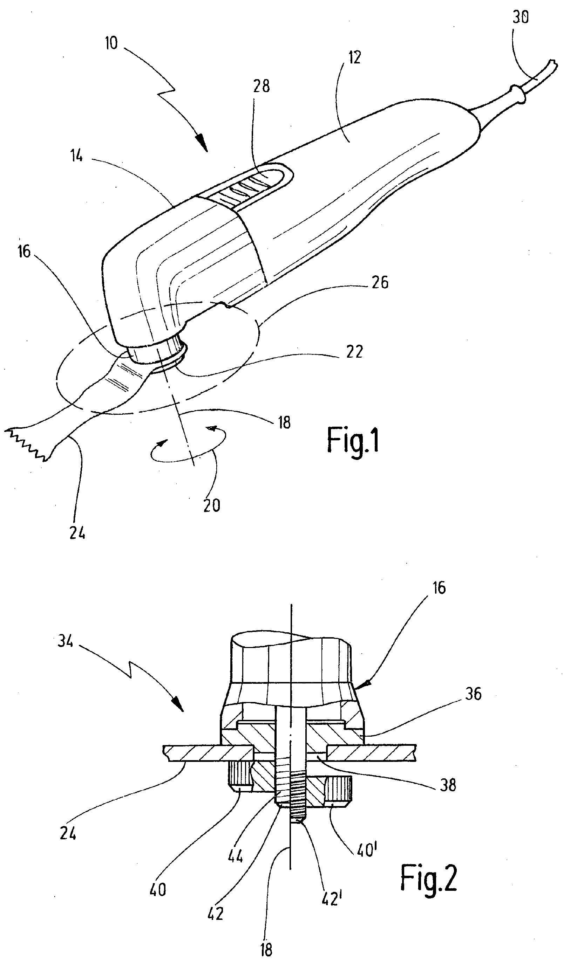

In Fig. 1 ist ein Handwerkzeug perspektivisch dargestellt, das insgesamt mit 10 bezeichnet ist. Bei dem Handwerkzeug 10 kann es sich um ein kraftgetriebenes Handwerkzeug handeln, insbesondere um ein elektromotorisch angetriebenes Handwerkzeug. Das Handwerkzeug 10 kann etwa als Oszillationsantrieb ausgestaltet sein.

Ein Handwerkzeug mit einem drehoszillatorischen Antrieb kann für eine Vielzahl von Sägearbeiten, Schneidarbeiten, Spachtelarbeiten, Schleifarbeiten oder Ähnliches eingesetzt werden. Üblicherweise weisen derartige Handwerkzeuge (Oszillationswerkzeuge) Verschwenkfrequenzen im Bereich von etwa 10.000 bis 25.000 Oszillationen pro Minute auf. Die Oszillationen können etwa bei einem geringen Verschwenkwinkel erfolgen, der bspw. zwischen 0,5° und 7° beträgt. Es versteht sich jedoch gleichfalls, dass das Handwerkzeug 10 etwa auch als Handwerkzeug mit einem zeitweise oder vollständig rotatorischen Antrieb ausgebildet sein kann. Ein solches Handwerkzeug kann etwa als Winkelschleifer, Handsäge oder Ähnliches ausgestaltet sein.

Das Handwerkzeug 10 weist ein Gehäuse 12 auf, dem sich ein Spindelkopf 14 anschließt. Es versteht sich, dass der Spindelkopf 14 integraler Bestandteil des Gehäuses 12 sein kann. Ebenso ist es vorstellbar, den Spindelkopf 14 modulartig an das Gehäuse 12 anzuflanschen. Im Gehäuse 12 (und dem Spindelkopf 14) kann eine Kraftübertragungseinrichtung, etwa ein Exzenterkoppeltrieb, aufgenommen sein (in Fig. 1 nicht dargestellt). Das Gehäuse 12 kann einen Motor beherbergen, bspw. einen Elektromotor oder einen Druckluftmotor. Im Gehäuse 12 können ferner Energiespeichereinrichtungen aufgenommen sein. Dies kann etwa dann der Fall sein, wenn es sich bei dem Handwerkzeug 10 um ein netzunabhängig betreibbares Handwerkzeug 10 handelt, insbesondere um ein Handwerkzeug 10 mit einem Akkumulatorpaket.

Im Spindelkopf 14 ist eine Werkzeugspindel 16 gelagert, deren werkzeugseitiges Ende das Gehäuse 12 im Bereich des Spindelkopfs 14 nach außen durchragt. Die Werkzeugspindel 16 kann eine Abtriebsbewegung ausführen, bspw. eine Drehoszillation oder eine Rotation um eine Längsachse 18. Die sich bei einer bevorzugten Gestaltung des Handwerkzeugs 10 als Oszillationswerkzeug ergebende drehoszillatorische Abtriebsbewegung wird durch einen mit 20 bezeichneten Doppelpfeil veranschaulicht.

An der Werkzeugspindel 16 ist ein Werkzeug 24 aufgenommen und mittels eines Befestigungselements 22 gesichert. Bei dem Werkzeug 24 handelt es sich bspw. um ein Sägewerkzeug oder ein Schneidwerkzeug mit einer räumlich begrenzten Verzahnung. Wie vorstehend erwähnt, kann das Werkzeug 24 jedoch auch als Schleifwerkzeug, Polierwerkzeug oder Ähnliches gestaltet sein. Das Werkzeug 24 kann eine Kröpfung aufweisen.

Eine mit 26 bezeichnete Kreislinie veranschaulicht, dass auch im Wesentlichen rotationssymmetrische Werkzeuge verwendbar sind, bspw. Schleifteller, Kreissägeblätter oder Ähnliches. Insbesondere dann, wenn das Handwerkzeug 10 dazu ausgebildet ist, die Werkzeugspindel 16 rotatorisch oder intermittierend anzutreiben, können kreisförmige Werkzeuge 26 zur Anwendung gelangen. Das Gehäuse 12 kann etwa stabförmig ausgebildet sein und in einem oberen Bereich, der dem Werkzeug 24 abgewandt ist, einen Betriebsschalter 28 aufweisen. So kann ein Benutzer das Handwerkzeug 10 in einem rückwärtigen Bereich halten und führen und das Werkzeug 10 über den Betriebsschalter 28 in Gang setzen oder zum Stillstand bringen. An einem rückwärtigen Ende, das dem Spindelkopf 14 abgewandt ist, weist das Handwerkzeug 10 ferner eine Versorgungsleitung 30 auf, die in Fig. 1 lediglich teilweise dargestellt ist. Mittels der Versorgungsleitung 30 kann das Handwerkzeug 10 etwa mit einem Versorgungsnetz gekoppelt werden, bspw. einem Stromnetz oder einem Luftdrucknetz. Wie vorstehend bereits erwähnt, kann das Handwerkzeug 10 jedoch auch netzunabhängig betrieben werden, bspw. mittels eines Akkumulatorpakets.

Handwerkzeuge mit drehoszillatorischem Abtrieb sind im Allgemeinen hochflexibel einsetzbar. Diese hohe Flexibilität kann jedoch dazu führen, dass das Werkzeug 24 vergleichsweise häufig gewechselt werden muss. Bei bekannten Handwerkzeugen sind für einen Wechselvorgang bspw. Spezialwerkzeuge oder ähnliche Hilfsmittel erforderlich. Ein möglicher Ansatz zur Vereinfachung eines Werkzeugwechsels kann darin gesehen werden, einen Werkzeugwechsel ausschließlich mit "Bordmitteln" zu ermöglichen. Derartige Gestaltungen können etwa der WO 2005/102605 A1, der EP 2 017 036 A1 oder der DE 20 2009 001 439 U1 entnommen werden. Die genannten Dokumente zeigen allesamt Handwerkzeuge, bei denen ein Werkzeugwechsel ohne separate Hilfsmittel möglich ist. Es wird bei den jeweiligen Gestaltungen in besonderem Maße auf Handwerkzeuge mit drehoszillatorischer Abtriebsbewegung Rücksicht genommen. Derartige Handwerkzeuge weisen insbesondere im Bereich ihrer Werkzeugaufnahmen höhere Belastungen als Werkzeuge vergleichbarer Größe auf, die etwa ausschließlich rotatorische Abtriebsbewegungen aufweisen. Ein drehoszillatorischer Antrieb eines Werkzeugs geht häufig mit höheren stoßartigen oder ruckartigen Belastungen einher. Die genannten Dokumente offenbaren Einrichtungen zur Verschiebung eines Befestigungselements. In einer jeweiligen Spannstellung ist es vorgesehen, mit einer hinreichend großen Kraft auf das Befestigungselement einzuwirken, um das Werkzeug sicher an der Werkzeugspindel aufnehmen zu können. Die erforderliche Kraft wird insbesondere mittels eines Federelements aufgebracht. Zur Betätigung für den Benutzer sind verschiedene Schwenkhebel vorgesehen, die etwa zwischen zwei definierten Stellungen verschwenkbar sind, um eine Spannstellung und eine Lösestellung für das Befestigungselement bereitzustellen.

Nachfolgend werden verschiedene beispielhaft Ausgestaltungen von Handwerkzeugen 10 erläutert, deren Werkzeugspannvorrichtungen grundsätzlich ähnlich denen der WO 2005/102605 A1, EP 2 017 036 A1 und DE 20 2009 001 439 U1 gestaltet sein können. In alternativer Weise ist jedoch für den Benutzer eine alternative Bedienlogik vorgesehen, die eine einfache und nachvollziehbare Betätigung der Spannvorrichtung erlaubt.

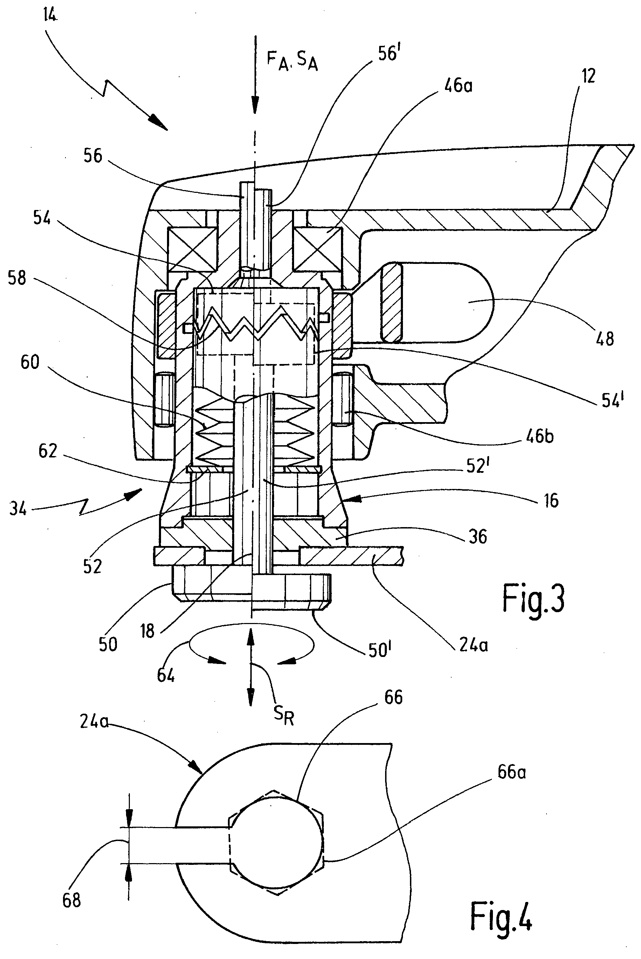

Fig. 2 zeigt beispielhaft eine seitliche Teilansicht einer Werkzeugspindel 16 im Bereich ihres werkzeugseitigen Endes. Die Werkzeugspindel 16 kann etwa beim Handwerkzeug 10 gemäß Fig. 1 zur Verwendung kommen. Ferner ist in Fig. 2 zumindest teilweise eine Spannvorrichtung 34 abgebildet, deren Grundaufbau etwa dem der DE 20 2009 001 439 U1 entsprechen kann. Eine detailliertere beispielhafte alternative Ausgestaltung der Spannvorrichtung 34 wird etwa in Fig. 3 veranschaulicht.

Die Werkzeugspindel 16 in Fig. 2 ist im Bereich ihres werkzeugseitigen Endes geschnitten dargestellt. Die Werkzeugspindel 16 weist einen Halteabschnitt 36 auf, an dem das Werkzeug 24 zur Anlage gelangen kann. Beispielhaft kann der Halteabschnitt 36 einen Vorsprung 38 aufweisen, der das Werkzeug 24 am Halteabschnitt 36 zentrieren kann. Der Vorsprung 38 und eine Aufnahmeöffnung des Werkzeugs 24 können darüber hinaus etwa derart korrespondierend gestaltet sein, dass sich für das Werkzeug 24 durch den Vorsprung 38 eine Verdrehsicherung um die Längsachse 18 ergibt.

Der Spannvorrichtung 34 ist ein Befestigungselement 40 zugeordnet, das beispielhaft als Mutter oder Rändelmutter ausgebildet sein kann. Das Befestigungselement 40 ist an einem Schaft 42 aufgenommen. Das Befestigungselement 40 kann mittels eines Gewindes 44 am Schaft 42 festgelegt werden. Das Befestigungselement 40 und der Schaft 42 befinden sich in einer Spannstellung, so dass sich die Spannvorrichtung 34 insgesamt in einer Spannkonfiguration befindet. In Fig. 2 sind ferner mit 40' und 42' sog. Freigabepositionen des Befestigungselements 40 und des Schafts 42 angedeutet. Die mit 40' und 42' veranschaulichten Lagen korrespondieren mit der Freigabekonfiguration der Spannvorrichtung 34. In der Freigabekonfiguration ist das Befestigungselement 40 gegenüber seiner Lage in der Spannkonfiguration axial vom Halteabschnitt 36 weggerichtet verlagert.

Gemäß der in Fig. 2 gezeigten beispielhaften Ausgestaltung kann das Befestigungselement 40 (hier: Spannmutter oder Rändelmutter) vom Schaft 42 gelöst werden, um das Werkzeug 24 entnehmen zu können. Dies kann grundsätzlich bei geringem Kraftaufwand erfolgen, da das Befestigungselement 40 in der Freigabekonfiguration nicht mittels einer Vorspannkraft gegen das Werkzeug 24 vorgespannt ist. Zur Aufnahme eines neuen Werkzeugs 24 kann das Befestigungselement 40 somit einfach gelöst und nach Aufsetzen oder Aufstecken des neuen Werkzeugs 24 wiederum einfach ohne große Kraftanstrengungen auf den Schaft 42 aufgeschraubt werden. Der Übergang der Spannvorrichtung 34 von der Freigabekonfiguration in die Spannkonfiguration führt wiederum zu einer axialen Verlagerung des am Schaft 42 aufgenommenen Befestigungselements 40, diesmal jedoch in Richtung auf den Halteabschnitt 36. Damit einhergehend kann eine Vorspannung erfolgen, die etwa mittels eines in Fig. 2 nicht näher dargestellten Federelements aufgebracht werden kann.

Fig. 3 zeigt einen größeren Ausschnitt einer seitlichen Ansicht eines Handwerkzeugs 10 etwa gemäß Fig. 1 im Bereich des Spindelkopfes. Die in Fig. 3 gezeigte Ausgestaltung kann grundsätzlich zur Ergänzung der in Fig. 2 dargestellten Komponenten genutzt werden.

Die Werkzeugspindel 16 ist mittels eines antriebsseitigen Lagers 46a und eines abtriebsseitigen Lagers 46b im Spindelkopf 14 aufgenommen. Zwischen den Lagern 46a, 46b ist eine Exzentergabel 48 aufgenommen, die drehfest mit der Werkzeugspindel 16 verbunden ist. Die Exzentergabel 48 ist dazu ausgebildet, eine Antriebsbewegung eines Antriebsmotors (in Fig. 3 nicht dargestellt) in eine drehoszillatorische Abtriebsbewegung der Werkzeugspindel 16 zu überführen, vgl. Pfeil 20 in Fig. 1. Die Exzentergabel 48 kann etwa dazu ausgestaltet sein, mit einem exzentrisch umlaufenden Abschnitt einer Motorwelle gekoppelt zu werden, die bspw. über ein balliges Lager auf die Exzentergabel 48 einwirkt.

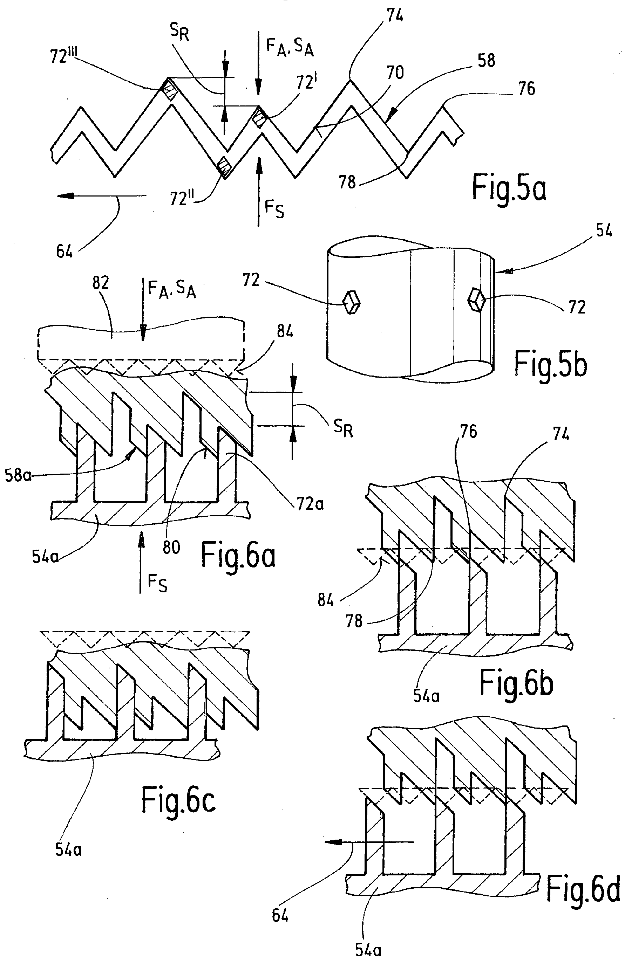

Die Spannvorrichtung 34 gemäß Fig. 3 weist ein Befestigungselement 50 auf, das etwa als Spannstück ausgestaltet ist. Das Befestigungselement 50 ist mit einem Spannschaft 52 verbunden, der mit einem Stellelement 54 (in Fig. 3 aus Veranschaulichungsgründen lediglich gestrichelt dargestellt) gekoppelt ist. Es kann sich ferner ein Druckstück 56 anschließen, das etwa die Werkzeugspindel 16 an ihrem antriebsseitigen Ende durchragen kann. Das antriebsseitige Ende der Werkzeugspindel 16 ist das dem werkzeugseitigen Ende gegenüberliegende Ende. Das Stellelement 54 ist in besonderer Weise mit einer Führungsbahn 58 gekoppelt, die vorliegend an einem inneren Umfang der Werkzeugspindel 16 ausgebildet ist. Die Führungsbahn 58 wird nachfolgend in Zusammenhang mit den Figuren 5a und 5b näher erläutert.

Das Stellelement 54 und die Führungsbahn 58 können etwa derart zusammenwirken, dass das Befestigungselement 50 zwei definierte Axiallagen entlang der Längsachse 18 einnehmen kann. Analog zur Darstellung in Fig. 2 ist auch in Fig. 3 eine Freigabestellung oder Freigabekonfiguration des Befestigungselements 50, des Spannschafts 52, des Stellelements 54 und des Druckstücks 56 durch eine Darstellung in verlagerter Position mit den Bezugsziffern 50', 52', 54' und 56' veranschaulicht.

Die Spannvorrichtung 34 gemäß Fig. 3 weist ferner ein Federelement 60 auf, das sich etwa an einem Stützring 62 abstützen kann, der an der Werkzeugspindel 16 aufgenommen ist. Das Federelement 60 kann dazu ausgebildet sein, das Stellelement 54 axial in Richtung auf die Spannstellung vorzuspannen. Zur Betätigung des Stellelements 54 kann eine Stellbewegung aufgebracht werden, die etwa durch eine Stellkraft F_{A} bzw. einen Stellweg S_{A} gekennzeichnet sein kann. Die Stellkraft F_{A} bzw. der Stellweg S_{A} können insbesondere auf das Druckstück 56 aufgebracht werden. Beim Übergang zwischen der Spannkonfiguration und der Freigabekonfiguration kann das Befestigungselement 50 eine mit S_{R} bezeichnete Relativbewegung vollziehen. Der relativen Verlagerung kann eine Verdrehung um die Längsachse 18 überlagert sein, vgl. einen mit 64 bezeichneten Pfeil.

In der Freigabekonfiguration ist das Befestigungselement 50' etwa derart gegenüber seiner Lage in der Spannkonfiguration verlagert, dass ein Werkzeug vom Halteabschnitt 36 gelöst werden kann. Dies kann grundsätzlich auch ohne ein vollständiges Lösen des Befestigungselements 50 von der Werkzeugspindel 16 erfolgen. Beispielhaft kann ein Werkzeug 24a genutzt werden, das eine Aufnahmeöffnung 66 aufweist, die mit einer Ausnehmung bzw. Freisparung 68 versehen ist (Fig. 4). Die Aufnahmeöffnung 66 ist nicht geschlossen ausgebildet. Die Freisparung 68 kann etwa an einen Durchmesser des Spannschafts 52 angepasst sein, um ein radiales Zuführen des Werkzeugs 24a zu erlauben. Die Aufnahmeöffnung 66 kann etwa kreisförmig bzw. kreisabschnittsförmig gestaltet sein, um zumindest eine Zentrierung des Werkzeugs 24a am Halteabschnitt 36 zu erlauben. Daneben kann beispielhaft auch eine mit 66a bezeichnete Aufnahmeöffnung vorgesehen sein, die derart formschlüssig an den Halteabschnitt 36 angepasst ist, dass sich für das aufgenommene Werkzeug 24a eine Verdrehsicherung ergibt. Beispielhaft ist die Aufnahmeöffnung 66a als Sechskant ausgebildet. Andere Geometrien sind denkbar, insbesondere Mehrkantkonturen, Zahnkonturen, Keilwellenkonturen oder Ähnliches.

In Zusammenschau der Figuren 3, 5a und 5b wird die nähere Gestaltung der Führungsbahn 58 und des mit dieser gekoppelten Stellelements 54 erläutert. Die Darstellung in Fig. 5a entspricht einer (ebenen) Abwicklung der umlaufenden Führungsbahn 58 gemäß Fig. 3. Die Führungsbahn 58 kann etwa als Führungsnut 70 an einem Innenumfang der Werkzeugspindel 16 ausgebildet sein. Am Stellelement 54 können Führungselemente 72 ausgebildet sein (Fig. 5b), die derart an die Führungsnut 70 angepasst sein können, dass das Stellelement 54 beim Durchlaufen der Führungsbahn 58 eine definierte Relativbewegung gegenüber der Werkzeugspindel 16 vollziehen kann. Am Stellelement 54 kann zumindest ein Führungselemente 72, jedoch auch eine Mehrzahl von Führungselementen 72 ausgebildet sein. Wie vorstehend bereits erwähnt, können in umgekehrter Weise auch die Führungselemente 72 an der Werkzeugspindel 16 und die Führungsbahn 58 am Stellelement 54 ausgebildet sein. Das in Fig. 5b lediglich geschnitten dargestellte Stellelement 54 kann etwa als zylindrischer oder hohlzylindrischer Abschnitt ausgeführt sein, der mittelbar oder unmittelbar mit dem Befestigungselement 50 und dem Druckstück 56 gekoppelt sein kann. Das Befestigungselement 50, der Spannschaft 52, das Stellelement 54 und das Druckstück 56 können einteilig oder mehrteilig gestaltet sein.

Die in Fig. 5a unterbrochen dargestellte umlaufende Führungsbahn 58 weist zumindest ein erstes Maximum 74 und zumindest ein zweites Maximum 76 auf. Die ersten Maxima 74 und die zweiten Maxima 76 wechseln sich einander ab. Die ersten Maxima 74 und die zweiten Maxima 76 sind durch Minima 78 miteinander verbunden. Beim Durchlaufen der Führungsbahn 58 kann das Stellelement 54 verschiedene definierte Relativlagen bezüglich der Werkzeugspindel 16 einnehmen. Eine mit 72' veranschaulichte Lage des Führungselements an einem zweiten Maximum 76 kann der Freigabestellung bzw. der Freigabekonfiguration entsprechen, in der etwa das Befestigungselement 50 axial vom Halteabschnitt 36 der Werkzeugspindel wegbewegt ist, um einen Werkzeugwechsel zu ermöglichen. Beim Übergang in Richtung auf die Spannkonfiguration muss ein Minimum 78 überwunden werden, vgl. das Führungselement 72" in Fig. 5a. Hierzu muss mittels der Stellbewegung eine Federkraft F_{S} überwunden werden, die etwa durch das Federelement 60 gemäß Fig. 3 aufgebracht wird. Nach dem Durchlaufen des Minimums 78 kann das Stellelement 54 grundsätzlich selbsttätig in Richtung auf die Spannstellung bzw. ein weiteres zweites Maximum 74 verlagert werden, vgl. das Führungselement 72'". Insgesamt kann sich so bei der in Fig. 5a gezeigten umlaufenden Gestaltung der Führungsbahn 58 bei wechselseitiger Stellbewegung (vgl. F_{A}, S_{A}) eine Zick-Zack-Bewegung für das Stellelement 54 ergeben.

Die axiale Lagedifferenz S_{R} zwischen den ersten Maxima 74 und den zweiten Maxima 76 beschreibt den resultierenden Weg des Stellelements 54. Der resultierende Weg S_{R} beschreibt einen sich ergebenden axialen Lageunterschied des Stellelements 54 beim Vergleich der ersten Relativlage und der zweiten Relativlage bezüglich der Werkzeugspindel 16. Beim Durchlaufen der Führungsbahn 58 gemäß Fig. 5a erfährt das Stellelement 54 jedoch auch insgesamt eine Verdrehung, die durch den mit 64 bezeichneten Pfeil veranschaulicht ist. Diese Verdrehung erfolgt um die Längsachse 18, vgl. auch den Pfeil 64 in Fig. 3. Diese Verdrehung muss nicht zwingend auf das Befestigungselement 50 übertragen werden. Es ist vorstellbar, das Befestigungselement 50 lediglich zur Axialmitnahme mit dem Stellelement 54 zu koppeln. Dies kann etwa durch geeignete Lager oder Gelenke erfolgen.

Ein Benutzer kann durch Erzeugung einer gleichgerichteten Stellbewegung die etwa im Wesentlichen axial und entgegengerichtet zur Federkraft F_{S} aufgebracht werden kann, eine (axiale) Hin- und Herbewegung des Stellelements 54 bewirken. Auf diese Weise kann sich eine Vereinfachung der Bedienung der Spannvorrichtung 34 ergeben.

Die Darstellung in Fig. 5a verdeutlicht, dass Flanken der Führungsnut 70 zumindest abschnittsweise schräg oder versetzt angeordnet sind. Durch eine derartige Gestaltung kann sichergestellt werden, dass die Führungselemente 72, die Führungsbahn 58 richtungsgebunden durchlaufen, vgl. den Pfeil 64. Mit anderen Worten kann die wiederkehrende gleichgerichtete Stellbewegung (F_{A}, S_{A}) schlussendlich neben dem Wechsel zwischen den zwei (axial) Relativlagen, vgl. die Extrema 74, 76, insgesamt eine globale seitliche Verdrehung oder Rotation des Stellelements 54 bewirken.

In den Figuren 6a, 6b, 6c und 6d ist in Abwandlung gegenüber den Figuren 5a und 5b ein alternativer Mechanismus dargestellt, bei dem ebenso mittels einer gleichgerichteten Stellbewegung (F_{A}, S_{A}) ein Umschalten der Spannvorrichtung 34 zwischen der Spannkonfiguration und der Freigabekonfiguration ermöglicht ist. Hierzu ist eine Führungsbahn 58a vorgesehen, die ebenso etwa umfänglich an der Werkzeugspindel 16 ausgebildet sein kann. Wiederum wird aus Vereinfachungsgründen eine abgewickelte Darstellung der Führungsbahn 58a gezeigt.

Die Führungsbahn 58a ist nicht als Führungsnut ausgebildet, sondern weist im Wesentlichen eine einseitige Führungskontur oder Flanke 80 auf. In stark vereinfachter Darstellung ist in Fig. 6 ferner ein Stellelement 54a angedeutet, das Führungselemente 72a aufweist, die entlang der Führungsbahn 58a geführt sind. Das Stellelement 54a kann mittels einer Federkraft F_{S} gegen die Führungsbahn 58a vorgespannt sein. Die Federkraft F_{S} muss mittels der gleichgerichteten Stellbewegung überwunden werden, um das Stellelement 54a zwischen einer Freigabestellung (Fig. 6a) und einer Spannstellung (Fig. 6c) verlagern zu können. Analog zur in Fig. 5a gezeigten Führungsbahn 58 weist die Führungsbahn 58a erste Maxima 74, zweite Maxima 76 und zwischen diesen angeordnete Minima 78 auf, vgl. Fig. 6b.

Zum Ausrücken und Überführen des Stellelements 54a zwischen der Freigabestellung und der Spannstellung ist ein Ausrückelement 82 vorgesehen, das eine Ausrückkontur 84 aufweist, die etwa als Zahnkontur ausgebildet ist. Unter Verweis auf die in Fig. 3 gezeigte Darstellung kann die Ausrückkontur 84 etwa mit dem Druckstück 56 gekoppelt sein, das dann jedoch nicht mehr fest mit dem Stellelement 54a verbunden ist. Das Ausrückelement 82 kann etwa als Hülse ausgebildet sein, an deren Stirnfläche die Ausrückkontur 84 ausgebildet ist. Die gleichgerichtete Stellbewegung kann durch Niederdrücken der Ausrückkontur 84 eingeleitet werden, vgl. Pfeil F_{A}, S_{A} in Fig. 6a. In Fig. 6b befindet sich die Ausrückkontur 84 im Eingriff mit den Führungselementen 72a des Stellelements 54a und drängt diese weg vom zweiten Maximum 76 und in Richtung auf und über das Minimum 78. Nach dem Übertritt über das Minimum 78 kann das Stellelement 54a selbsttätig die in Fig. 6c gezeigte Spannstellung einnehmen. Durch die Federkraft F_{S} werden die Führungselemente 72a in Richtung auf das erste Maximum 74 bewegt.

Der sich beim Übergang zwischen der Freigabestellung und der Spannstellung ergebende resultierende Weg S_{R} ist in Fig. 6a veranschaulicht. Der Weg S_{R} entspricht etwa einer (axialen) Lagedifferenz zwischen den ersten Maxima 74 und den zweiten Maxima 76. Ein erneutes Verfahren des Ausrückelements 82 veranlasst eine erneute Stellbewegung und wiederum ein Ausrücken des Stellelements 54a aus seiner eingenommenen Lage in Richtung auf die nächste definierte Lage. Insgesamt kann sich eine schrittweise (seitliche) Bewegung ergeben, die in Fig. 6d durch den Pfeil 64 angedeutet ist. Diese Bewegung kann insgesamt eine Verdrehung des Stellelements 54a gegenüber der Werkzeugspindel 16 bewirken, wenn die Führungsbahn 58a, das Stellelement 54a und das Ausrückelement 82 kreisförmig umlaufend ausgebildet sind.

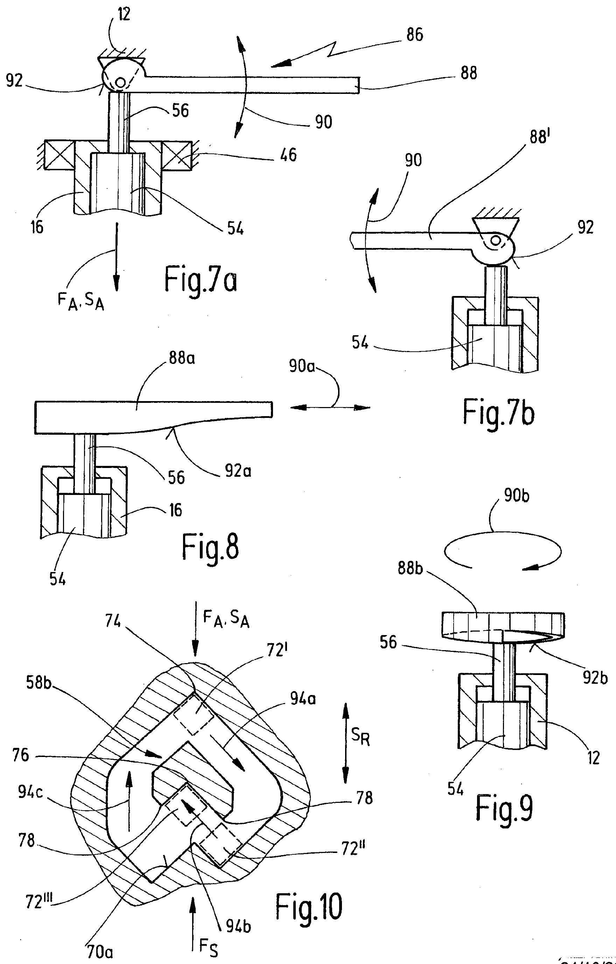

In den Figuren 7a, 7b, 8 und 9 werden verschiedene Gestaltungen von Betätigungseinrichtungen 86 veranschaulicht, die sich hinsichtlich ihrer Betätigungselemente 88 unterscheiden. Die in Fig. 7a dargestellte Betätigungseinrichtungen 86 weist ein Betätigungselement 88 auf, das etwa als Schwenkhebel ausgebildet ist. Das Betätigungselement 88 ist um eine Schwenkachse verschwenkbar, vgl. einen mit 90 bezeichneten Pfeil. Das Betätigungselement 88 weist eine Wirkfläche 92 auf, die etwa als Nockenfläche oder Exzenterfläche ausgebildet ist. Mittels der Betätigungseinrichtung 86 kann der Benutzer direkt oder indirekt die Stellbewegung aufbringen, vgl. den mit F_{A}, S_{A} bezeichneten Pfeil. Hierzu kann das Betätigungselement 88 etwa dazu ausgestaltet sein, über die Wirkfläche 92 mit dem Druckstück 56 zusammenzuwirken. Beispielhaft kann das Druckstück 56 mit dem Stellelement 54 gekoppelt sein, das an der Werkzeugspindel 16 aufgenommen ist.

In der in Fig. 7b gezeigten Stellung ist das Stellelement 54 gegenüber seiner Lage in Fig. 7a verlagert. Das hier mit 88' bezeichnete Betätigungselement ist gegenüber seiner Ursprungslage verschwenkt. Im Gegensatz zu im Stand der Technik bekannten Lösungen entspricht die in Fig. 7b gezeigte Stellung des Stellelements keiner neuen Extremlage, also etwa der Spannkonfiguration oder Freigabekonfiguration, sondern etwa einem Übergang über eines der Minima 78, vgl. Fig. 5a und 6b. Ein Zurückschwenken des Betätigungselements 88' in die in Fig. 7a gezeigte Lage bewirkt folglich nicht ein erneutes Umschalten der Spannvorrichtung 34. Ein weiterer Übergang zwischen der Spannkonfiguration und der Freigabekonfiguration (bzw. umgekehrt) kann durch erneutes Verschwenken des Betätigungselements 88 in die in Fig. 7b angedeutete Stellung eingeleitet werden. Somit kann sich für den Benutzer eine eindeutige Wirkrichtung ergeben. Eine gleichgerichtete Betätigungsbewegung kann die gleichgerichtete Stellbewegung verursachen.

In den Figuren 8 und 9 sind alternative Gestaltungen von Betätigungselementen 88a, 88b in vereinfachter Darstellung gezeigt. Das Betätigungselement 88a gemäß Fig. 8 ist etwa als Betätigungsschieber ausgebildet, der beispielhaft entlang eines mit 90a bezeichneten Pfeils verschiebbar ist. Das Betätigungselement 88a weist eine Wirkfläche 92a auf, mittels der auf das Druckstück 56 eingewirkt werden kann. Das Betätigungselement 88a kann in geeigneter Weise etwa am Gehäuse 12 des Handwerkzeugs 10 aufgenommen und geführt sein.

Das Betätigungselement 88b gemäß Fig. 9 ist beispielhaft als Stellrad ausgeführt. Das Betätigungselement 88b ist verdrehbar aufgenommen, vgl. einen mit 90b bezeichneten Pfeil. Das Betätigungselement 88b ist um eine Achse verdrehbar aufgenommen, die etwa parallel zur Längsachse 18 (Fig. 3) liegt, jedoch beabstandet von dieser angeordnet ist. Das Betätigungselement 88b weist eine Wirkfläche 92b auf, die etwa entlang eines Ringabschnitts einer axialen Stirnfläche des Betätigungselements 88b ausgebildet ist. Beispielhaft weist die Wirkfläche 92b zwei miteinander korrespondierende und etwa um 180° versetzt angeordnete ansteigende Flanken auf. Andere Gestaltungen sind denkbar. Eine kontinuierliche Verdrehung (hier: jeweils 180°) des Betätigungselements 88b kann die Spannvorrichtung 34 abwechselnd in die Spannkonfiguration und die Freigabekonfiguration überführen.

Die in den Figuren 7a, 7d, 8 und 9 gezeigten Betätigungseinrichtungen 86 können beispielhaft mit der in Fig. 3 gezeigten Ausgestaltung der Spannvorrichtung 34 kombiniert werden. Alternativ ist es vorstellbar, die Spannvorrichtung 34 gemäß Fig. 3 direkt durch Einwirkung auf das Druckstück 56 zu betätigen, etwa mittels eines Betätigungsknopfes.

Mittels einer geeigneten Ausgestaltung der Wirkflächen 92, 92a, 92b können die Betätigungselemente 88, 88a, 88b kraftverstärkend wirken. Mit anderen Worten kann etwa eine Betätigungskraft geeignet übersetzt werden, um eine hinreichend hohe Stellkraft F_{A} erzielen zu können, die die Spannkraft F_{S} des Federelements 60 überwinden kann.

Fig. 10 zeigt eine weitere alternative Gestaltung eines Mechanismus, bei dem mittels einer gleichgerichteten Stellbewegung (Pfeil F_{A}, S_{A}) ein definiertes Verfahren zwischen zwei Relativlagen ermöglicht ist. Hierzu ist eine Führungsbahn 58b vorgesehen, die eine Führungsnut oder Führungskontur 70a aufweist, die etwa "herzförmig" gestaltet ist. Mit 94a, 94b und 94c bezeichnete Pfeile veranschaulichen eine Bewegung des Führungselements 72 entlang der Führungsbahn 58b.

Die Führungsbahn 58b ist als wiederkehrende bzw. zurückkehrende Führungsbahn ausgestaltet. Im Gegensatz etwa zur umlaufenden Führungsbahn 58 gemäß Fig. 5a ist es nicht erforderlich, dass die wiederkehrende Führungsbahn 58b die Längsachse 18 (vgl. Fig. 3) umrundet. Vielmehr kann die Führungsbahn 58b seitlich etwa an einer Innenfläche der Werkzeugspindel 16 oder einer Außenfläche des Stellelements 54 ausgebildet bzw. eingebracht sein. Die Führungsbahn 58b weist genau ein erstes Maximum 74 und ein zweites Maximum 76 auf. Zwischen den Maxima 74, 76 ist jeweils ein Minimum 78 vorgesehen. Ein sich beim Wechsel zwischen den beiden Maxima 74, 76 ergebender Weg ist mit S_{R} veranschaulicht. Der Weg S_{R} kann den Abstand zwischen den zwei definierten Relativlagen des Stellelements 54 bezüglich der Werkzeugspindel 16 veranschaulichen. Ein mit 72' angedeutetes Führungselement befindet sich in der ersten Extremlage, die der ersten definierten Relativlage zugeordnet ist. Ein mit 72" angedeutetes Führungselement findet sich im Bereich eines Minimums 78, das beim Übergang zwischen den Maxima 74, 76 zu überwinden ist. Ein mit 72'" bezeichnetes Führungselement befindet sich am zweiten Maximum der Führungsbahn 58b, somit kann sich das Stellelement 54 in der zweiten definierten Relativlage, etwa der Freigabekonfiguration, befinden. Die Führungselemente 72 können gemäß Fig. 5b am Stellelement 54 ausgebildet sein.

Wie vorstehend bereits erwähnt, ist es bevorzugt, wenn das Stellelement 54 und das Befestigungselement 40; 50 in der Spannkonfiguration mit einer Federkraft beaufschlagt werden. Es versteht sich daher, dass die Führungselemente 72 in der Spannkonfiguration bei aufgenommenen Werkzeug 24 nicht unbedingt die ersten Maxima der Führungsbahn 58, 58a, 58b kontaktieren müssen. Vielmehr kann sich eine Lücke ergeben, die etwa durch eine Dicke des aufgenommenen Werkzeugs definiert sein kann. Es versteht sich jedoch ebenso, dass die Führungsbahnen 58, 58a, 58b derart gestaltet sein können, dass die Führungselemente 72 die ersten Maxima 74 trotzdem passieren können, um den zweiten Maxima 76 zugeführt zu werden.

## Patentansprüche

1. Kraftgetriebenes Handwerkzeug mit einem Gehäuse (12) mit einem Spindelkopf (14), mit einer um ihre Längsachse (18) antreibbaren, insbesondere drehoszillatorisch antreibbaren Werkzeugspindel (16), wobei die Werkzeugspindel (16) ein werkzeugseitiges Ende mit einem Halteabschnitt (36) für ein anzutreibendes Werkzeug (24) aufweist, und mit einer Spannvorrichtung (34), mit einem Befestigungselement (40; 50), wobei die Spannvorrichtung (34) eine Spannkonfiguration, in der das Werkzeug (24) mittels des Befestigungselements (40; 50) an der Werkzeugspindel (16) fixierbar ist, und eine Freigabekonfiguration aufweist, in der das Werkzeug (24) lösbar ist, mit einem Stellelement (54), das relativ zur Werkzeugspindel (16) verlagerbar ist und in der Spannkonfiguration eine erste definierte Relativlage und in der Freigabekonfiguration eine zweite definierte Relativlage bezüglich der Werkzeugspindel (16) einnimmt, **dadurch gekennzeichnet, dass** eine Führungsbahn (58) vorgesehen ist, die zumindest ein erstes Extremum und zumindest ein zweites Extremum aufweist, wobei die erste definierte Relativlage des Stellelements (54) in der Spannkonfiguration durch das zumindest eine erste Extremum und die zweite definierte Relativlage des Stellelements (54) in der Freigabekonfiguration durch das zumindest eine zweite Extremum definiert ist, und wobei die Spannvorrichtung (34) mittels einer gleichgerichteten Stellbewegung zwischen der Spannkonfiguration und der Freigabekonfiguration umschaltbar ist.

2. Handwerkzeug (10) nach Anspruch 1, **dadurch gekennzeichnet, dass** die Führungsbahn (58) als umlaufende Führungsbahn ausgebildet ist und dass das Stellelement (54) bei wiederholter Stellbewegung insgesamt eine Verdrehung um die Werkzeugspindel (16) vollzieht.

3. Handwerkzeug (10) nach Anspruch 1, **dadurch gekennzeichnet, dass** die Führungsbahn (58) als zurückkehrende Führungsbahn ausgebildet ist, und dass das Stellelement (54) bei wiederholter Stellbewegung bezüglich der Werkzeugspindel (16) abwechselnd hin und her geschwenkt wird.

4. Handwerkzeug (10) nach einem der Ansprüche 1 bis 3, **dadurch gekennzeichnet, dass** die Führungsbahn (58) an der Werkzeugspindel (16) ausgebildet ist, und dass das Stellelement (54) zumindest ein Führungselement (72) aufweist, das entlang der Führungsbahn verfahrbar ist.

5. Handwerkzeug (10) nach einem der Ansprüche 1 bis 4, **dadurch gekennzeichnet, dass** das Stellelement (54) mit einem Ausrückelement (82) koppelbar ist, das dazu ausgebildet ist, das Stellelement (54) selektiv aus der ersten Relativlage oder der zweiten Relativlage auszurücken.

6. Handwerkzeug (10) nach einem der Ansprüche 1 bis 5, **gekennzeichnet durch** ein Federelement (60), das das Stellelement (54) in Richtung auf das zumindest eine erste Extremum und das zumindest eine zweite Extremum beaufschlagt.

7. Handwerkzeug (10) nach Anspruch 6, **dadurch gekennzeichnet, dass** das Befestigungselement (40; 50) in der Spannkonfiguration mittels des Federelements (60) in Richtung auf den Halteabschnitt (36) der Werkzeugspindel (16) beaufschlagt wird.

8. Handwerkzeug (10) nach einem der Ansprüche 1 bis 7, **dadurch gekennzeichnet, dass** das Befestigungselement (40; 50) und das Stellelement (54) miteinander koppelbar sind.

9. Handwerkzeug (10) nach einem der vorhergehenden Ansprüche, **gekennzeichnet durch** eine Betätigungseinrichtung (86), die ein Betätigungselement (88) aufweist, das mit dem Stellelement (54) zu dessen Verlagerung koppelbar ist.

10. Handwerkzeug (10) nach Anspruch 9, **dadurch gekennzeichnet, dass** das Betätigungselement (88) dazu ausgebildet ist, eine durch einen Benutzer aufgebrachte Betätigungskraft zu verstärken.

11. Handwerkzeug (10) nach Anspruch 9 oder 10, **dadurch gekennzeichnet, dass** das Betätigungselement (88) als Betätigungsschieber oder als Betätigungshebel ausgebildet ist.

12. Handwerkzeug (10) nach Anspruch 11, **dadurch gekennzeichnet, dass** das Befestigungselement (40; 50) in der Freigabekonfiguration gegenüber seiner Lage in der Spannkonfiguration gegenüber der Werkzeugspindel (16) entlang der Längsachse (18) axial verlagert ist.

13. Handwerkzeug (10) nach einem der vorhergehenden Ansprüche, **dadurch gekennzeichnet, dass** das Befestigungselement (40; 50) in der Freigabekonfiguration von der Werkzeugspindel (16) lösbar ist.

## Claims

1. A powered hand tool comprising a housing (12) that comprises a spindle head (14) having a tool spindle (16) that can be driven about its longitudinal axis (18), in particular can be driven in an oscillatory rotary manner, the tool spindle (16) having a tool-side end comprising a holding portion (36) for a tool (24) to be driven, and comprising a clamping device (34) that comprises a fastening element (40; 50), the clamping device (34) having a clamping configuration, in which the tool (24) can be fixed to the tool spindle (16) by means of the fastening element (40; 50), and having a release configuration, in which the tool (24) is releasable, further comprising a positioning element (54), which is displaceable relative to the tool spindle (16) and which, when in the clamping configuration, assumes a first defined relative position and, when in the release configuration, assumes a second defined relative position in respect of the tool spindle (16), **characterized in that** a guide path (58) is provided, which has at least one first extremum and at least one second extremum, the first defined relative position of the positioning element (54), when in the clamping configuration, being defined by the at least one first extremum, and the second defined relative position of the positioning element (54), when in the release configuration, being defined by the at least one second extremum, and **in that** the clamping device (34) can be switched over between the clamping configuration and the release configuration by means of a unidirectional positioning movement.

2. The hand tool (10) according to claim 1, **characterized in that** the guide path (58) is realized as a full-perimeter guide path, and the positioning element (54), in the case of repeated positioning movement, executes overall a rotation about the tool spindle (16).

3. The hand tool (10) according to claim 1, **characterized in that** the guide path (58) is configured as a re-entrant guide path, and the positioning element (54), in the case of repeated positioning movement, is swivelled alternately back and forth in respect of the tool spindle (16).

4. The hand tool (10) according to any one of claims 1 to 3, **characterized in that** the guide path (58) is configured on the tool spindle (16), and the positioning element (54) has at least one guide element (72), which can be moved along the guide path.

5. The hand tool (10) according to any one of claims 1 to 4, **characterized in that** the positioning element (54) can be coupled to a disengaging element (82), which is configured to selectively disengage the positioning element (54) from the first relative position or the second relative position.

6. The hand tool (10) according to any one of claims 1 to 5, **characterized by** a spring element (60), which acts upon the positioning element (54) in the direction of the at least one first extremum and the at least one second extremum.

7. The hand tool (10) according to claim 6, **characterized in that** the fastening element (40; 50), when in the clamping configuration, is acted upon by means of the spring element (60) in the direction of the holding portion (36) of the tool spindle (16).

8. The hand tool (10) according to any one of claims 1 to 7, **characterized in that** the fastening element (40; 50) and the positioning element (54) can be coupled to each other.

9. The hand tool (10) according to any one of the preceding claims, **characterized by** an actuating means (86), which has an actuating element (88) that can be coupled to the positioning element (54) for the purpose of displacing the latter.

10. The hand tool (10) according to claim 9, **characterized in that** the actuating element (88) is configured to boost an actuating force applied by a user.

11. The hand tool (10) according to claim 9 or 10, **characterized in that** the actuating element (88) is configured as an actuating slide or as an actuating lever.

12. The hand tool (10) according to Claim 11, **characterized in that** the fastening element (40; 50), when in the release configuration, as compared with its position when in the clamping configuration, is displaced axially along the longitudinal axis (18) in relation to the tool spindle (16).

13. The hand tool (10) according to any one of the preceding claims, **characterized in that** the fastening element (40; 50), when in the release configuration, can be released from the tool spindle (16).

## Revendications

1. Outil manuel motorisé comprenant un boîtier (12) avec une tête de broche (14), avec une broche d'outil (16) pouvant être entraînée autour de son axe longitudinal (18), notamment pouvant être entraînée par oscillation de rotation, la broche d'outil (16) présentant une extrémité côté outil avec une portion de retenue (36) pour un outil à entraîner (24), et comprenant un dispositif de serrage (34), avec un élément de fixation (40 ; 50), le dispositif de serrage (34) présentant une configuration de serrage dans laquelle l'outil (24) peut être fixé à la broche d'outil (16) au moyen de l'élément de fixation (40 ; 50), et une configuration de libération dans laquelle l'outil (24) peut être libéré, comprenant un élément de réglage (54) qui peut être déplacé par rapport à la broche d'outil (16) et qui, dans la configuration de serrage, adopte une première position relative définie et, dans la configuration de libération, adopte une deuxième position relative définie par rapport à la broche d'outil (16), **caractérisé en ce qu'**une piste de guidage (58) est prévue, laquelle présente au moins un premier extrême et au moins un deuxième extrême, la première position relative définie de l'élément de réglage (54), dans la configuration de serrage, étant définie par l'au moins un premier extrême et la deuxième position relative définie de l'élément de réglage (54), dans la configuration de libération, étant définie par l'au moins un deuxième extrême, et le dispositif de serrage (34) pouvant être commuté au moyen d'un mouvement de réglage orienté dans le même sens entre la configuration de serrage et la configuration de libération.

2. Outil manuel (10) selon la revendication 1, **caractérisé en ce que** la piste de guidage (58) est réalisée sous forme de piste de guidage circonférentielle et **en ce que** l'élément de réglage (54), lors d'un mouvement de réglage répété, effectue dans l'ensemble une rotation autour de la broche d'outil (16).

3. Outil manuel (10) selon la revendication 1, **caractérisé en ce que** la piste de guidage (58) est réalisée sous la forme d'une piste de guidage à renvoi et **en ce que** l'élément de réglage (54), en cas de déplacement de réglage répété, est pivoté en alternance d'avant en arrière par rapport à la broche d'outil (16).

4. Outil manuel (10) selon l'une quelconque des revendications 1 à 3, **caractérisé en ce que** la piste de guidage (58) est réalisée sur la broche d'outil (16) et **en ce que** l'élément de réglage (54) présente au moins un élément de guidage (72) qui peut être déplacé le long de la piste de guidage.

5. Outil manuel (10) selon l'une quelconque des revendications 1 à 4, **caractérisé en ce que** l'élément de réglage (54) peut être accouplé à un élément de débrayage (82) qui est réalisé de manière à débrayer l'élément de réglage (54) de manière sélective hors de la première position relative ou hors de la deuxième position relative.

6. Outil manuel (10) selon l'une quelconque des revendications 1 à 5, **caractérisé par** un élément de ressort (60) qui sollicite l'élément de réglage (54) dans la direction de l'au moins un premier extrême et de l'au moins un deuxième extrême.

7. Outil manuel (10) selon la revendication 6, **caractérisé en ce que** l'élément de fixation (40 ; 50), dans la configuration de serrage, est sollicité au moyen de l'élément de ressort (60) dans la direction de la portion de retenue (36) de la broche d'outil (16).

8. Outil manuel (10) selon l'une quelconque des revendications 1 à 7, **caractérisé en ce que** l'élément de fixation (40 ; 50) et l'élément de réglage (54) peuvent être accouplés l'un à l'autre.

9. Outil manuel (10) selon l'une quelconque des revendications précédentes, **caractérisé par** un dispositif d'actionnement (86) qui présente un élément d'actionnement (88) qui peut être accouplé à l'élément de réglage (54) en vue de son déplacement.

10. Outil manuel (10) selon la revendication 9, **caractérisé en ce que** l'élément d'actionnement (88) est réalisé pour renforcer une force d'actionnement appliquée par un utilisateur.

11. Outil manuel (10) selon la revendication 9 ou 10, **caractérisé en ce que** l'élément d'actionnement (88) est réalisé sous forme de coulisseau d'actionnement ou sous forme de levier d'actionnement.

12. Outil manuel (10) selon la revendication 11, **caractérisé en ce que** l'élément de fixation (40 ; 50), dans la configuration de libération, est déplacé axialement par rapport à sa position dans la configuration de serrage par rapport à la broche d'outil (16) le long de l'axe longitudinal (18).

13. Outil manuel (10) selon l'une quelconque des revendications précédentes, **caractérisé en ce que** l'élément de fixation (40 ; 50), dans la configuration de libération, peut être détaché de la broche d'outil (16).
